# EUROPÄISCHE PATENTSCHRIFT

(11) **EP 1 859 181 B1**
(45) Veröffentlichungstag und Bekanntmachung des Hinweises auf die Patenterteilung: **23.07.2008**
(21) Anmeldenummer: 06704441.2
(22) Anmeldetag: 01.02.2006
(51) Int. Cl.: F16H 55/08

(54) **VERFAHREN ZUR FESTLEGUNG DER VERZAHNUNGSGEOMETRIEN EINER ZAHNRADPAARUNG ZWEIER ZAHNRÄDER MIT SICH SCHNEIDENDEN ACHSEN**
METHOD FOR ESTABLISHING THE GEARING GEOMETRIES OF A GEAR PAIRING OF TWO GEARS WITH INTERSECTING AXES
PROCEDE POUR FIXER LA GEOMETRIE DE LA DENTURE D'UN ENGRENAGE ENTRE DEUX ROUES DENTEES DONT LES AXES SE CROISENT

(30) Priorität: 02.02.2005 DE 102005005169
(43) Veröffentlichungstag der Anmeldung: 28.11.2007
(73) Patentinhaber: SONA BLW Präzisionsschmiede GmbH, 80807 München (DE)
(72) Erfinder: GUTMANN, Peter, 81927 München (DE)
(74) Vertreter: Grättinger & Partner (GbR)
(86) Internationale Anmeldenummer: PCT/EP2006/000874
(87) Internationale Veröffentlichungsnummer: WO 2006/082038

(56) Entgegenhaltungen:
- DE-A1- 2 446 172
- DE-A1- 2 616 765
- US-A- 4 651 587

## Beschreibung

Die vorliegende Erfindung betrifft ein Verfahren zur Festlegung der Verzahnungsgeometrien einer Zahnradpaarung zweier Zahnräder mit sich schneidenden Achsen, insbesondere einer Zahnradpaarung aus Kronenrad und Ritzel entsprechend den Ansprüchen 1, 2. Ferner betrifft die vorliegende Erfindung eine Zahnradpaarung aus Kronenrad und Ritzel mit konjugiert zueinander ausgebildeten Verzahnungen entsprechend dem Anspruch 5.

Zur Festlegung der Geometrien der Verzahnungen einer Zahnradpaarung aus Kronenrad und Ritzel hat sich im Stand der Technik ein auf einer numerischen Berechnung basierendes Verfahren durchgesetzt, bei welchem unter Vorgabe der exakten Geometrie des einen Partners der Zahnradpaarung ein vollständiger Abrollvorgang des Ritzels auf dem Kronenrad simuliert wird, wodurch die Geometrie der Verzahnung des anderen Partners der Zahnradpaarung festlegbar ist. Man spricht hierbei von dem Verfahren der "konjugierten Erzeugung". Eine gute Übersicht über den diesbezüglichen Stand der Technik bietet das Buch "Development of Gear Technology and Theory of Gearing" von Faydor L. Litvin, NASA (National Aeronautics and Space Administration) aus dem Jahr 1997. Eine so festgelegte Zahnradpaarung aus Kronenrad und Ritzel bzw. aus zwei konisch verzahnten Zahnrädern kann dann in Kenntnis der exakten Verzahnungsgeometrien beider Zahnräder mittels bekannter spanabhebender und/oder umformender Herstellungsverfahren erzeugt werden. Hierzu ist jedoch stets die exakte Vorgabe der Verzahnungsgeometrie eines Partners der Zahnradpaarung notwendig.

Nach dem bekannten Stand der Technik wird im Falle einer Zahnradpaarung aus Kronenrad und Ritzel zumeist eine zylindrische Geometrie der Ritzelverzahnung zugrundegelegt, bei der die Zahnflanken der Zähne des Ritzels über die axiale Breite des Ritzels einen geradlinigen Verlauf aufweisen.

Zur Festlegung vorteilhafter Verzahnungsgeometrien einer Zahnradpaarung aus Kronenrad und Ritzel wurde jedoch auch schon eine komplexere Geometrie für die Zähne des Ritzels vorgeschlagen, bei der zur Reduzierung eines ansonsten an den Zahnflanken der Zähne des Kronenrads entstehenden Unterschnitts von der üblichen zylindrischen Verzahnungsgeometrie abgewichen wird. Hierzu wurde beispielsweise vorgeschlagen, die Zahnflankentragfähigkeit der Zähne des Kronenrads zu verbessern, indem an den Zähnen des Ritzels über deren axiale Breite eine Eingriffswinkel- und/oder Profilverschiebungsvariation vorgesehen ist. Mit einer über die axiale Breite der Ritzelzähne zunehmenden Kopfkürzung kann dabei ferner ein Unterschnitt der Zähne des Kronenrads vorteilhaft weiter reduziert werden. Auch hier weisen die Zahnflanken der Ritzelzähne eine Geometrie auf, die in axialer Richtung stets durch einen geradlinigen Verlauf gekennzeichnet ist.

Das Verfahren der konjugierten Erzeugung erweist sich bereits zur Festlegung der vorgenannten komplexeren Verzahnungsgeometrien als nicht optimal, da hierzu in jedem Fall bereits die exakte Geometrie des einen Partners der Zahnradpaarung bekannt sein muß. Zur Optimierung und Festlegung der Verzahnungsgeometrie ist man deshalb häufig auf zahlreiche Berechnungsdurchläufe angewiesen, mit denen man sich unter Variation verschiedenster Verzahnungsparameter einer Zahnradpaarung mit den gewünschten geometrischen Eigenschaften annähert.

Es ist daher die Aufgabe der vorliegenden Erfindung, ein Verfahren zur Festlegung der Verzahnungsgeometrien einer Zahnradpaarung zweier Zahnräder mit sich schneidenden Achsen, insbesondere einer Zahnradpaarung aus Kronenrad und Ritzel bereitzustellen, mit dem bei geringem Rechenaufwand optimale Verzahnungsgeometrien für Kronenrad und Ritzel im Sinne einer möglichst hohen Zahnflankentragfähigkeit der Zähne des Kronenrads und einer möglichst hohen Betriebsfestigkeit der Verzahnung insgesamt festlegbar ist. Ferner soll eine Zahnradpaarung aus Kronenrad und Ritzel bereitgestellt werden, deren zueinander konjugiert ausgebildete Verzahnungsgeometrien sich in Bezug auf die Betriebsfestigkeit der Zahnradpaarung vorteilhaft vom Stand der Technik abheben.

Diese Aufgabe wird für eine Zahnradpaarung zweier Zahnräder mit konischer Verzahnung durch ein Verfahren nach den nebengeordneten Ansprüchen 1 oder 2 gelöst. Obgleich das erfindungsgemäße Verfahren - unter gewissen Nebenbedingungen - für beliebige Zahnradpaare mit sich schneidenden Achsen geeignet ist, so wird das Verfahren mit seinen Vorteilen nachfolgend an Hand der Ausführung nach Anspruch 3 erläutert, gemäß dem es sich bei der Zahnradpaarung um eine solche aus Kronenrad und Ritzel handelt, die sich unter einem Achskreuzwinkel von 90° schneiden.

Erfindungsgemäß wird dabei zunächst eine erste Verzahnungsgeometrie eines "virtuellen" Ritzels vorgegeben, die als Ausgangsbasis für die nachfolgenden Berechnungs- und Festlegungsschritte der Verzahnungen dienen soll. Ausgehend von dieser vorgegebenen Verzahnungsgeometrie des virtuellen Ritzels wird die sich aus einem Abrollvorgang des virtuellen Ritzels in konjugierter Erzeugung ergebende Verzahnungsgeometrie eines "virtuellen" Kronenrads berechnet, wobei in Abweichung zu dem vorbekannten Verfahren der konjugierten Erzeugung nicht ein vollständiger Abrollvorgang des virtuellen Ritzels, der einen Unterschnitt der Zahnflanken des Kronenrads mit sich brächte, sondern nur ein "halber" Abrollvorgang zugrundegelegt wird. Die Berechnung der sich aus dem Abrollvorgang ergebenden Zahnflankengeometrie des virtuellen Kronenrads wird hierzu an dem Punkt beendet, an welchem sich der für die Berechnung der Zahnflanken beim Abrollvorgang herangezogene Zahn des virtuellen Ritzels in der Symmetriestellung in der Zahnlücke des virtuellen Kronenrads befindet. Durch den vorzeitigen Abbruch der konjugierten Erzeugung wird somit die Geometrie einer Zahnflanke eines Zahns eines virtuellen Kronenrads berechnet, auf welcher der vorgegebene virtuelle Ritzelzahn halb abrollen kann. Die berechnete Zahnflanke stellt sich dadurch im mathematischen Sinne als die Einhüllende des halb abrollenden virtuellen Ritzelzahns dar. Die korrespondierende Gegenflanke wird dabei entweder durch Spiegeln der halb ausgewälzten, unterschnittfreien Zahnflanke erzeugt oder unter Zugrundelegung eines weiteren halben Abrollvorgangs in umgekehrter Laufrichtung berechnet. Die zwei Zahnflanken eines jeden Zahns des virtuellen Kronenrads weisen dann - ausgehend von einer für beide Laufrichtungen symmetrisch vorgegebenen Verzahnungsgeometrie des virtuellen Ritzels - eine zueinander symmetrische Geometrie auf. Es sei ausdrücklich darauf hingewiesen, daß das vorgegebene virtuelle Ritzel auf dem berechneten virtuellen Kronenrad nicht vollständig wälzen kann.

Ausgehend von der Verzahnungsgeometrie des virtuellen Kronenrads, bei welcher die Zahnflanken aufgrund der zugrundeliegenden Berechnungsweise mittels eines nur halben Abrollvorgangs keinen Unterschnitt aufweisen, wird sodann mittels rückwärts-konjugierter Erzeugung die sich ergebende Geometrie der beiden Zahnflanken eines dem Verzahnungsgesetz genügenden Ritzelzahns berechnet. Dabei kann es in dem - bezogen auf den Umlauf des Ritzels auf dem Kronenrad - radial innen liegenden Bereich der Ritzelverzahnung zu einer Überspitzung der (separat) berechneten Zahnflanken des Ritzels kommen, bei der sich die zwei Zahnflanken eines Ritzelzahns schneiden. In diesem Fall ergibt der - bezogen auf die Höhe des Zahns - über der Schnittlinie liegende Bereich beider Zahnflanken technisch keinen Sinn; die sich ergebende Überspitzung wird mit einer entsprechenden Kürzung der Zahnflanken, die in einer entsprechenden Kürzung des Zahnkopfes resultiert, vermieden. Die so erhaltene Geometrie einer Ritzelverzahnung wird sodann als endgültige Geometrie der Ritzelverzahnung festgelegt. In äußerst vorteilhafter Weise weist damit ein derart beschaffener Ritzelzahn eine bezogen auf dessen Umlauf auf dem Kronenrad radial innen liegende Kopfkürzung auf; im Gegensatz zu den bisher bekannten Ritzelverzahnungen, deren Zahnflanken axial geradlinig verlaufen, weisen die mit dem erfindungsgemäßen Verfahren in ihrer Geometrie festgelegten Zahnflanken des Ritzelzahns über dessen axiale Breite einen nicht überall geradlinigen, sondern gekrümmten Verlauf auf.

Sodann kann gemäß der ersten Verfahrensvariante nach Anspruch 1 die Verzahnungsgeometrie des virtuellen Kronenrads als endgültige Geometrie der Kronenradverzahnung festgelegt werden. Das in seiner Geometrie bereits endgültig festgelegte Ritzel ergab sich ja gerade aus einer rückkwärts-konjugierten Erzeugung, so daß erfindungsgemäß zwei zueinander konjugierte Zahnräder festgelegt sind.

Alternativ hierzu kann als letzter Schritt des erfindungsgemäßen Verfahrens gemäß Anspruch 2 - ausgehend von dem in seiner Geometrie endgültig festgelegten Ritzel unter Zugrundelegung eines vollständigen Abrollvorgangs des Ritzels - mittels konjugierter Erzeugung die Geometrie einer Kronenradverzahnung berechnet werden; diese wird sodann als endgültige Geometrie der Kronenradverzahnung festgelegt. Dieser letzte Schritt dient gewissermaßen der Kontrolle der vorherigen Berechnungsschritte, da die entstehende und festgelegte Geometrie der Kronenradverzahnung im wesentlichen derjenigen des zuvor berechneten virtuellen Kronenrads entsprechen muß.

Im Ergebnis ist damit erfindungsgemäß die Verzahnungsgeometrie einer Zahnradpaarung aus Kronenrad und Ritzel festgelegt, bei welcher ein Unterschnitt der Zahnflanken des Kronenrads vollständig vermieden wird. Die nach dem Verfahren optimal in ihrer Geometrie festgelegten Zahnflanken der Zähne des Kronenrads weisen eine hohe Tragfähigkeit auf. Auch die Zähne des Ritzels - und damit auch die Zahnradpaarung insgesamt - sind insbesondere aufgrund ihrer in axialer Richtung gekrümmt verlaufenden Zahnflanken in vorteilhafter Weise hinsichtlich einer möglichst hohen Betriebsfestigkeit ausgelegt. Ersichtlich ist das Verfahren nicht nur auf die Festlegung der Geometrie einer Zahnradpaarung aus Kronenrad und Ritzel beschränkt, sondern kann - wie bereits zuvor erwähnt - für beliebige Zahnradpaarungen mit sich schneidenden Achsen, bei denen ein etwa entstehender Unterschnitt an einem der beiden Zahnräder vermieden werden soll, angewendet werden. Insbesondere kann das Verfahren somit auch auf Zahnradpaarungen angewendet werden, bei denen sich die Zahnräder unter einem Achskreuzwinkel ungleich 90° schneiden. Das erfindungsgemäße Verfahren ermöglicht - auch in diesem Fall - eine schnelle und optimale Festlegung der hierzu vorteilhaften Verzahnungsgeometrien.

In einer weiteren bevorzugten Ausgestaltung des erfindungsgemäßen Verfahrens weist die vorzugebende Verzahnungsgeometrie des Ritzels eine über die axiale Breite der Zähne konstante Zahnhöhe und einen sich verändernden Verlauf des Eingriffswinkels und/oder der Profilverschiebung auf. Eine solche bereits vorteilhafte, von der bisher üblichen zylindrischen Zahnform abweichende Geometrie der Ritzelverzahnung wird damit in äußerst vorteilhafter Art und Weise nochmals optimiert. Die am Ritzel entstehende Kopfkürzung wird vorteilhaft auf das zur Vermeidung eines Unterschnitts notwendige Mindestmaß beschränkt.

In besonders vorteilhafter Weise wird das Verfahren auf eine Zahnradpaarung aus Kronenrad und Ritzel mit einem Achskreuzwinkel von 90° angewendet, bei der zwischen Kronenrad und Ritzel kein Achsversatz besteht und das Ritzel eine Geradverzahnung aufweist. Eine die vorgenannten Eigenschaften aufweisende Zahnradpaarung eignet sich nämlich bevorzugt als Bestandteil eines hohen Belastungen unterworfenen Differentialausgleichsgetriebes, wofür die Zahnradpaarung vorteilhaft optimale Eigenschaften bezüglich ihrer Betriebsfestigkeit benötigt. Dies soll jedoch nicht einschränkend gelten, da das vorliegende Verfahren insbesondere auch bei Kronenrad/Ritzel-Paarungen mit Schrägverzahnung anwendbar ist.

Schließlich richtet sich die vorliegende Erfindung auch auf eine Zahnradpaarung aus Kronenrad und Ritzel mit zueinander konjugiert ausgebildeten Verzahnungen, die **dadurch gekennzeichnet** ist, daß die Zähne des Ritzels über ihre Breite eine - bezogen auf den Umlauf des Ritzels auf dem Kronenrad - radial nach innen zunehmende Kopfkürzung aufweisen und die Zahnflanken der Ritzelzähne über ihre Breite gekrümmten verlaufen. Diese Zahnradpaarung zeichnet sich somit durch diejenigen Merkmale aus, die bei dem erfindungsgemäßen Verfahren zu Tage treten; sie hebt sich vom vorbekannten Stand der Technik in äußerst vorteilhafter Weise dadurch ab, daß die Zähne des Ritzels über ihre axiale Breite eine zunehmende Kopfkürzung sowie einen krummlinigen Verlauf ihrer Zahnflanken aufweisen.

Ausgehend von dem über die axiale Zahnbreite gekrümmten Verlauf der Zahnflanken der Zähne des Ritzels und der bezogen auf den Umlauf des Ritzels auf dem Kronenrad radial innen liegenden Kopfkürzung ergibt sich durch konjugierte Erzeugung der Verzahnung des Kronenrads eine hinsichtlich einer hohen Betriebsfestigkeit optimierte Zahnradpaarung. Gemäß einer vorteilhaften Ausführung der erfindungsgemäßen Zahnradpaarung kann dabei ferner vorgesehen sein, daß die Zahnflanken des Kronenrads vollflächig tragen und somit keinen Unterschnitt aufweisen. Die vorteilhaften Auswirkungen des nicht erforderlichen Unterschnitts auf die Zahnflankentragfähigkeit der Zähne des Kronenrads sind evident.

Nachfolgend wird ein Ausführungsbeispiel des erfindungsgemäßen Verfahrens und der erfindungsgemäßen Zahnradpaarung aus Kronenrad und Ritzel an Hand der Zeichnung näher erläutert. Dabei zeigt
- Fig. 1a, 1c, 1d: jeweils eine perspektivische Sicht auf eine schematische Darstellung der sich bei Durchführung eines Ausführungsbeispiels des erfindungsgemäßen Verfahrens ergebenden Geometrie eines Ritzelzahns,
- Fig. 1b, 1e: jeweils eine perspektivische Sicht auf eine schematische Darstellung der sich bei Durchführung des Ausführungsbeispiels des erfindungsgemäßen Verfahrens ergebenden Geometrie einer Kronenradzahnlücke,
- Fig. 2: eine Darstellung eines Ritzelzahns eines Ausführungsbeispiels der erfindungsgemäßen Zahnradpaarung aus Kronenrad und Ritzel in mehreren Schnittbildern und
- Fig. 3: eine Darstellung eines Kronenradzahns eines Ausführungsbeispiels der erfindungsgemäßen Zahnradpaarung aus Kronenrad und Ritzel in mehreren Schnittbildern.

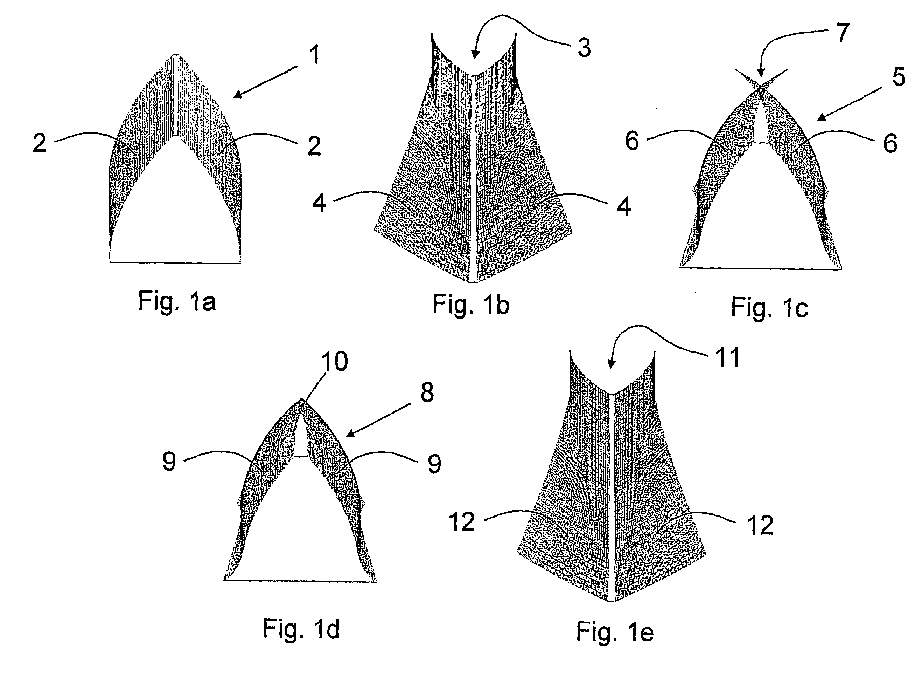

Fig. 1a zeigt eine schematische, perspektivische Darstellung eines Zahns 1 des - im Rahmen der Durchführung eines Ausführungsbeispiels des erfindungsgemäßen Verfahrens - in seiner Geometrie vorgegebenen virtuellen Ritzels. Die beiden Zahnflanken 2 des dargestellten virtuellen Ritzelzahns 1 sind zueinander symmetrisch ausgebildet und können beispielsweise über ihre axiale Breite eine abnehmende Profilverschiebung sowie einen zunehmenden Eingriffswinkel aufweisen. Die für eine Ritzel-/Kronenradverzahnung bekannten Grenzbedingungen, wie etwa die Spitzengrenze und die Interferenzgrenze werden dabei vorteilhaft eingehalten.

Fig. 1b) zeigt dann eine schematische, perspektivische Darstellung einer sich unter Simulation eines halben Abrollvorgangs des virtuellen Ritzels nach Fig. 1a ergebenden Zahnlücke 3 zwischen zwei benachbarten Zähnen des virtuellen Kronenrads. Die beiden die Zahnlücke 3 der Kronenradverzahnung begrenzenden Zahnflanken 4 sind symmetrisch zueinander ausgebildet und weisen keinen Unterschnitt auf, da der der Berechnung zugrundeliegende Abrollvorgang beendet wurde, als sich der Zahn 1 des virtuellen Ritzels in seiner Symmetriestellung in der Zahnlücke 3 der Verzahnung des virtuellen Kronenrads befand.

Fig. 1c zeigt dann eine schematische Ansicht der sich in rückwärts-konjugierter Erzeugung ergebenden Zahnflanken 6 eines Zahns 5 des Ritzels, die eine Überspitzung 7 aufweisen. Diese keinen technischen Sinn ergebende Überkreuzung der Zahnflanken 6, wird durch eine Kürzung der Zahnflanken 6 im Bereich der Überspitzung 7 vermieden.

Fig. 1d zeigt den sich hieraus ergebenden Ritzelzahn 8, dessen Geometrie als endgültige Geometrie der Ritzelverzahnung festgelegt wird. Gut zu erkennen ist die Kopfkürzung 10. Die resultierenden Zahnflanken 9 wurden gegenüber den Zahnflanken 6 im Bereich der Überspitzung 7 gekürzt. Ausgehend von diesem Ritzelzahn wird sodann mittels konjugierter Erzeugung die Geometrie einer Kronenradverzahnung berechnet, von der eine Zahnlücke 11 zusammen mit den beiden die Zahnlücke begrenzenden Zahnflanken 12 zweier benachbarter Kronenradzähne in Fig. 1e schematisch dargestellt ist. Schließlich wird dann diese Verzahnungsgeometrie des Kronenrads, die im wesentlichen mit derjenigen aus Fig. 1b übereinstimmt, als endgültige Geometrie festgelegt.

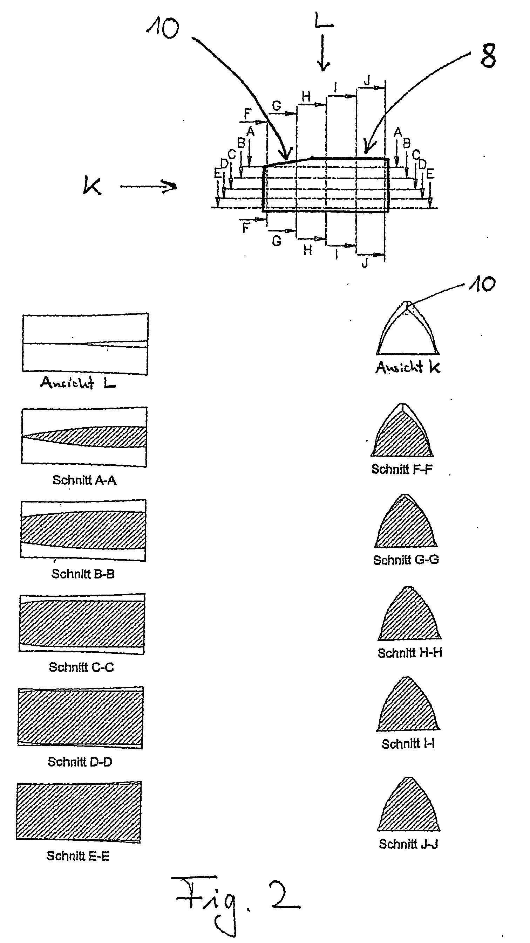

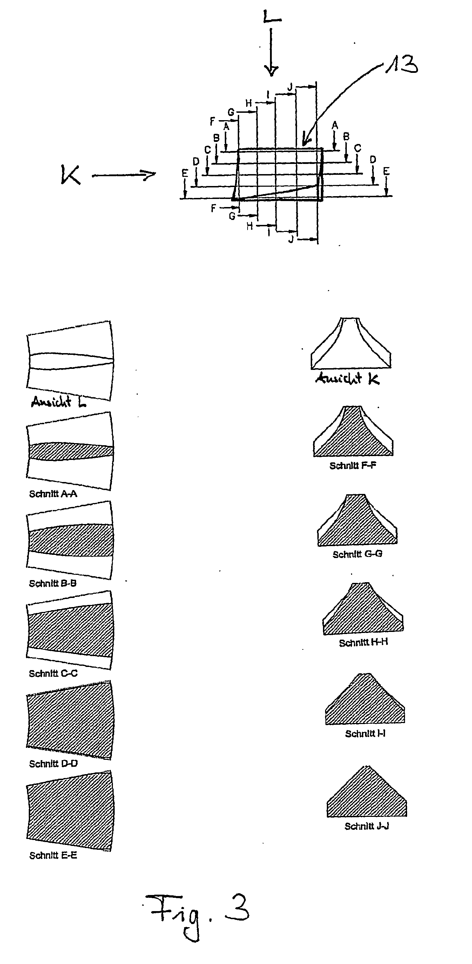

In den Figuren 2 und 3 finden sich dann noch Darstellungen jeweils eines Zahns von Ritzel und Kronenrad eines Ausführungsbeispiels einer erfindungsgemäßen Zahnradpaarung, deren Verzahnungsgeometrien nach dem vorstehend erläuterten Verfahren festgelegt wurden.

Fig. 2 zeigt in der oben mittig angeordneten Darstellung eine Seitenansicht eines Zahns 8 des als Stirnzahnrad ausgebildeten Ritzels einer erfindungsgemäßen Zahnradpaarung. Die sich bei Durchführung des erfindungsgemäßen Verfahrens ergebende Kopfkürzung 10 am Zahn 8 des Ritzels ist gut zu erkennen.

Links unterhalb der Seitenansicht des Zahns 8 ist ferner eine Draufsicht auf den Zahn 8 gemäß Pfeil L der Seitenansicht dargestellt. Darunter finden sich dann die Darstellungen der Schnitte A-A, B-B, C-C, D-D, und E-E gemäß den in der Seitenansicht eingezeichneten Schnittführungen. Der in den Schnitten A-A bis E-E schraffierte Bereich stellt den von der jeweiligen Schnittführung erfaßten Teil des Zahns 8 dar. Die Zahnflanken des Zahns 8 des Ritzels verlaufen über ihre - in den jeweiligen Schnitten von links nach rechts verlaufende axiale Breite - nicht geradlinig, sondern gekrümmt, was insbesondere durch die in den Schnitten A-A und B-B besonders deutlich erkennbare (konvexe) Ausbauchung im Bereich des Zahnkopfs zum Ausdruck kommt. Darüber hinaus ist aus der Draufsicht auf den Zahn (Ansicht L) zu erkennen, daß die Zahnflanken auch im Bereich des Zahnfußes, deren Verlauf durch die oberen und unteren Begrenzungslinien der Ansicht L ersichtlich ist, leicht gekrümmt verlaufen, dort hingegen nicht in Form einer Aus- sondern vielmehr in Form einer geringen (konkaven) Einbuchtung der Zahnflanken.

Rechts unterhalb der Seitenansicht des Zahns 8 ist ferner eine Sicht auf den Zahn 8 gemäß Pfeil K der Seitenansicht dargestellt. Auch hier ist die Kopfkürzung 10 gut zu erkennen. Darunter finden sich Darstellungen der Schnitte F-F bis J-J durch den Zahn 8, in denen wiederum der jeweils in der Schnittebene liegende Teil des Zahns 8 durch Schraffur gekennzeichnet ist.

Fig. 3 zeigt in der oben mittig angeordneten Darstellung eine Seitenansicht eines Zahns 13 des Kronenrads einer erfindungsgemäßen Zahnradpaarung, dessen Verzahnung konjugiert zur Ritzelverzahnung nach Fig. 2 ausgebildet ist.

Links unterhalb der Seitenansicht des Zahns 13 ist ferner eine Draufsicht auf den Zahn 13 gemäß Pfeil L der Seitenansicht dargestellt. Darunter finden sich dann die Darstellungen der Schnitte A-A, B-B, C-C, D-D, und E-E gemäß den in der Seitenansicht eingezeichneten Schnittführungen. Der in den Schnitten A-A bis E-E schraffierte Bereich stellt den von der jeweiligen Schnittführung erfaßten Teil des Zahns 13 dar.

Rechts unterhalb der Seitenansicht des Zahns 13 ist ferner eine Sicht auf den Zahn 13 gemäß Pfeil K der Seitenansicht dargestellt. Darunter finden sich Darstellungen der Schnitte F-F bis J-J durch den Zahn 13, in denen wiederum der jeweils in der Schnittebene liegende Teil des Zahns 13 durch Schraffur gekennzeichnet ist. Die Zahnflanken des Zahns 13 des Kronenrads weisen in äußerst vorteilhafter Weise keinen Unterschnitt auf.

## Patentansprüche

1. Verfahren zur Festlegung der Verzahnungsgeometrien einer Zahnradpaarung zweier Zahnräder mit sich schneidenden Achsen, wobei das Verfahren die folgenden Schritte umfaßt:
- Vorgeben einer ersten Verzahnungsgeometrie eines virtuellen ersten Zahnrads;
- Berechnen der sich aus einem Abrollvorgang eines Zahns (1) der vorgegebenen Geometrie des virtuellen ersten Zahnrads bei konjugierter Erzeugung ergebenden Geometrie der Verzahnung eines virtuellen zweiten Zahnrads der Zahnradpaarung, wobei der der Berechnung zugrundeliegende Abrollvorgang des Zahns (1) des virtuellen ersten Zahnrads in dessen Symmetriestellung in der Zahnlücke (3) des zweiten virtuellen Zahnrads beendet wird;
- Berechnen der sich in rückwärts-konjugierter Erzeugung ergebenden Zahnflankengeometrie der Zähne des ersten Zahnrads unter Zugrundelegung eines vollen Abrollvorgangs eines Zahns des virtuellen zweiten Zahnrads mit dem ersten Zahnrad, wobei eine sich ergebende Überspitzung (7) durch eine Zurücknahme der Zahnflanken in diesem Bereich vermieden wird;
- Festlegen der endgültigen Geometrie der Verzahnung des ersten Zahnrads entsprechend der im vorherigen Schritt berechneten Zahnflankengeometrie der Verzahnung des ersten Zahnrads;
- Festlegen der endgültigen Geometrie der Verzahnung des zweiten Zahnrads entsprechend der zuvor berechneten Zahnflankengeometrie der Verzahnung des virtuellen zweiten Zahnrads.

2. Verfahren zur Festlegung der Verzahnungsgeometrien einer Zahnradpaarung zweier Zahnräder mit sich schneidenden Achsen, wobei das Verfahren die folgenden Schritte umfaßt:
- Vorgeben einer ersten Verzahnungsgeometrie eines virtuellen ersten Zahnrads;
- Berechnen der sich aus einem Abrollvorgang eines Zahns (1) der vorgegebenen Geometrie des virtuellen ersten Zahnrads bei konjugierter Erzeugung ergebenden Geometrie der Verzahnung eines virtuellen zweiten Zahnrads der Zahnradpaarung, wobei der der Berechnung zugrundeliegende Abrollvorgang des Zahns (1) des virtuellen ersten Zahnrads in dessen Symmetriestellung in der Zahnlücke (3) des zweiten virtuellen Zahnrads beendet wird;
- Berechnen der sich in rückwärts-konjugierter Erzeugung ergebenden Zahnflankengeometrie der Zähne des ersten Zahnrads unter Zugrundelegung eines vollen Abrollvorgangs eines Zahns des virtuellen zweiten Zahnrads mit dem ersten Zahnrad, wobei eine sich ergebende Überspitzung (7) durch eine Zurücknahme der Zahnflanken in diesem Bereich vermieden wird;
- Festlegen der endgültigen Geometrie der Verzahnung des ersten Zahnrads entsprechend der im vorherigen Schritt berechneten Zahnflankengeometrie der Verzahnung des ersten Zahnrads;
- Berechnen der sich aus einem vollen Abrollvorgang des ersten Zahnrads mit der festgelegten Geometrie durch konjugierte Erzeugung ergebenden Zahnflankengeometrie der Zähne des zweiten Zahnrads;
- Festlegen der endgültigen Geometrie der Verzahnung des zweiten Zahnrads entsprechend der im vorherigen Schritt berechneten Zahnflankengeometrie der Verzahnung des zweiten Zahnrads.

3. Verfahren nach Anspruch 1 oder Anspruch 2, **dadurch gekennzeichnet,**
**daß** es sich bei dem ersten Zahnrad um ein Ritzel und bei dem zweiten Zahnrad um ein Kronenrad handelt, die einen Achskreuzwinkel von 90° aufweisen.

4. Verfahren nach Anspruch 3, **dadurch gekennzeichnet, daß** die vorgegebene Verzahnungsgeometrie des virtuellen Ritzels eine über die axiale Breite der Zähne konstante Zahnhöhe und einen sich verändernden Verlauf des Eingriffswinkels und/oder der Profilverschiebung aufweist.

5. Zahnradpaarung aus Kronenrad und Ritzel mit \/erzakungsgeometrien festgelgt nach dem Verfahren eines der vorherigen Ansprüche, wobei die Verzahnungen von Kronenrad und Ritzel konjugiert zueinander ausgebildet und die Zahnflanken (9) der Ritzelzähne über ihre Breite gekrümmt sind, **dadurch gekennzeichnet, daß** die Zähne (8) des Ritzels bezogen auf den Umlauf des Ritzels auf dem Kronenrad eine über ihre Breite nach radial innen zunehmende Kopfkürzung (10) aufweisen.

6. Zahnradpaarung aus Kronenrad und Ritzel nach Anspruch 5, **dadurch gekennzeichnet, daß** die Zahnflanken des Kronenrads (12) voll tragen und ein Unterschnitt vollständig vermieden wird.

## Claims

1. Method for establishing the gearing geometries of a gear pairing of two gears with intersecting axes, wherein the method comprises the following steps:
- Setting a first gearing geometry of a virtual first gear;
- Calculating the geometry of the gearing of a virtual second gear of the gear pairing resulting from a rolling-off process of a tooth (1) of the set geometry of the virtual first gear with conjugate generation, wherein the rolling-off process of the tooth (1) of the virtual first gear used as a base for the calculation is ended in the symmetry position of said gear in the tooth gap (3) of the second virtual gear;
- Calculating the tooth flank geometry of the teeth of the first gear obtained in reverse-conjugate generation on the basis of a full rolling-off process of a tooth of the virtual second gear with the first gear, wherein a resulting over-pointing (7) is avoided by taking back the tooth flanks in this region;
- Establishing the final geometry of the gearing of the first gear in accordance with the tooth flank geometry of the gearing of the first gear calculated in the previous step;
- Establishing the final geometry of the gearing of the second gear in accordance with the tooth flank geometry of the gearing of the virtual second gear calculated previously.

2. Method for establishing the gearing geometries of a gear pairing of two gears with intersecting axes, wherein the method comprises the following steps:
- Setting a first gearing geometry of a virtual first gear;
- Calculating the geometry of the gearing of a virtual second gear of the gear pairing resulting from a rolling-off process of a tooth (1) of the set geometry of the virtual first gear with conjugate generation, wherein the rolling-off process of the tooth (1) of the virtual first gear used as a base for the calculation is ended in the symmetry position of said gear in the tooth gap (3) of the second virtual gear;
- Calculating the tooth flank geometry of the teeth of the first gear obtained in reverse-conjugate generation on the basis of a full rolling-off process of a tooth of the virtual second gear with the first gear, wherein a resulting over-pointing (7) is avoided by taking back the tooth flanks in this region;
- Establishing the final geometry of the gearing of the first gear in accordance with the tooth flank geometry of the gearing of the first gear calculated in the previous step;
- Calculating the tooth flank geometry of the teeth of the second gear resulting from a full rolling-off process of the first gear with the established geometry through conjugate generation;
- Establishing the final geometry of the gearing of the second gear in accordance with the tooth flank geometry of the gearing of the virtual second gear calculated in the previous step.

3. The method according to Claim 1 or Claim 2, **characterized in that** the first gear is a pinion and the second gear is a crown wheel having an axis-intersecting angle of 90°.

4. The method according to Claim 3, **characterized in that** the set gearing geometry of the virtual pinion comprises a constant tooth height over the axial width of the teeth and a changing course of the angle of approach and/or the profile displacement.

5. A gear pairing of crown wheel and pinion with gearing geometries established according to the method of one of the previous claims, wherein the gearings of crown wheel and pinion are embodied conjugate relative to each other and the tooth flanks (9) of the pinion teeth are curved over their width, **characterized in that** the teeth (8) of the pinion relative to the circulation of the pinion on the crown wheel comprise a crest curtailment (10) which increases radially to the inside over their width.

6. The gear pairing of crown wheel and pinion according to Claim 5, **characterized in that** the tooth flanks of the crown wheel bear in full and an undercut is entirely avoided.

## Revendications

1. Procédé pour fixer la géométrie de la denture d'un engrenage entre deux roues dentées dont les axes se croisent, moyennant quoi le procédé comprend les étapes suivantes :
- prescrire une première géométrie de la denture d'une première roue dentée virtuelle,
- calculer la géométrie de la denture d'une deuxième roue dentée virtuelle de l'engrenage résultant d'un processus de roulement d'une dent (1) de la géométrie prescrite de la première roue dentée virtuelle lors d'une production conjointe, moyennant quoi le processus de roulement de la dent (1) de la première route dentée virtuelle, étant à la base du calcul se termine dans la position symétrique de celle-ci dans l'entre-dents (3) de la deuxième roue dentée virtuelle ;
- calculer la géométrie de flanc de dent résultant d'une production conjointe vers l'arrière des dents de la première roue dentée, en considérant un processus de roulement complet d'une dent de la deuxième roue dentée virtuelle avec la première roue dentée, moyennant quoi un dépassement (7) qui en résulte est évité dans cette zone par un retrait des flancs de dent ;
- fixer la géométrie finale de la denture de la première roue dentée de manière correspondante à la géométrie de flanc de dent de la denture de la première roue dentée calculée à l'étape précédente ;
- fixer la géométrie finale de la denture de la deuxième roue dentée de manière correspondante à la géométrie de flanc de dent de la denture de la deuxième roue dentée virtuelle calculée à l'étape ci-avant.

2. Procédé pour fixer la géométrie de la denture d'un engrenage entre deux roues dentées dont les axes se croisent, moyennant quoi le procédé comprend les étapes suivantes :
- prescrire une première géométrie de la denture d'une première roue dentée virtuelle ;
- calculer la géométrie de la denture d'une deuxième roue dentée virtuelle de l'engrenage résultant d'un processus de roulement d'une dent (1) de la géométrie prescrite de la première roue dentée virtuelle lors d'une production conjointe, moyennant quoi le processus de roulement de la dent (1) de la première route dentée virtuelle, étant à la base du calcul se termine dans la position symétrique de celle-ci dans l'entre-dents (3) de la deuxième roue dentée virtuelle ;
- calculer la géométrie de flanc de dent résultant d'une production conjointe vers l'arrière des dents de la première roue dentée, en considérant un processus de roulement complet d'une dent de la deuxième roue dentée virtuelle avec la première roue dentée, moyennant quoi un dépassement (7) qui en résulte est évité dans cette zone par un retrait des flancs de dent ;
- fixer la géométrie finale de la denture de la première roue dentée de manière correspondante à la géométrie de flanc de dent de la denture de la première roue dentée calculée à l'étape précédente ;
- calculer la géométrie de flanc de dent des dents de la deuxième roue dentée résultant d'un processus de roulement complet de la première roue dentée ayant la géométrie fixée par une production conjointe ;
- fixer la géométrie finale de la denture de la deuxième roue dentée de manière correspondante à la géométrie de flanc de dent de la denture de la deuxième roue dentée calculée à l'étape ci-avant.

3. Procédé selon la revendication 1 ou 2, **caractérisé en ce que**
la première roue dentée est un pignon et la deuxième roue dentée est une couronne dentée, qui présentent un angle d'intersection d'axes de 90°.

4. Procédé selon la revendication 3, **caractérisé en ce que** la géométrie de denture prescrite du pignon virtuel présente une hauteur de dent constante sur la largeur axiale des dents et un cours variable de l'angle de mise en prise et/ou du décalage de profil.

5. Engrenage composé d'une couronne dentée et d'un pignon, ayant des géométries de denture fixées selon le procédé d'une des revendications précédentes, moyennant quoi les dentures de la couronne dentée et du pignon sont configurées conjointement l'une à l'autre et les flancs de dents (9) des dents de pignon sont recourbés sur leur largeur, **caractérisé en ce que** les dents (8) du pignon présentent par rapport à la circonférence du pignon un rétrécissement de tête (10) augmentant radialement vers l'intérieur sur leur largeur.

6. Engrenage composé d'une couronne dentée et d'un pignon selon la revendication 5, **caractérisé en ce que** les flancs de dent de la couronne dentée (12) supportent la totalité des charges et une interférence de pied de dent est complètement évitée.
